(19) **Europäisches Patentamt**

**European Patent Office**

**Office européen des brevets**

(11) **EP 0 978 082 B1**

(12) **FASCICULE DE BREVET EUROPEEN**

(45) Date de publication et mention
de la délivrance du brevet:
**14.08.2002 Bulletin 2002/33**

(51) Int Cl.⁷: **G06K 7/00**, G06K 19/07

(21) Numéro de dépôt: **97925134.5**

(86) Numéro de dépôt international:
**PCT/FR97/00915**

(22) Date de dépôt: **26.05.1997**

(87) Numéro de publication internationale:
**WO 97/49059 (24.12.1997 Gazette 1997/55)**

(54) **DISPOSITIF POUR STABILISER LA TENSION D'ALIMENTATION D'UN MICROCIRCUIT**

VORRICHTUNG ZUM STABILISIEREN DER VERSORGUNGSSPANNUNG EINES
MIKROSCHALTKREISES

DEVICE FOR STABILISING A MICROCIRCUIT SUPPLY VOLTAGE

(84) Etats contractants désignés:
**DE FR GB IT NL**

(30) Priorité: **19.06.1996 FR 9607835**

(43) Date de publication de la demande:
**09.02.2000 Bulletin 2000/06**

(73) Titulaire: **Inside technologies
69930 Saint-Clément-les-Places (FR)**

(72) Inventeur: **KOWALSKI, Jacek
13530 Trets (FR)**

(74) Mandataire: **Marchand, André
OMNIPAT,
24 Place des Martyrs de la Résistance
13100 Aix-en-Provence (FR)**

(56) Documents cités:
EP-A- 0 386 718        EP-A- 0 572 066
US-A- 4 583 157        US-A- 5 285 370

**Description**

La présente invention concerne un dispositif pour stabiliser une tension d'alimentation d'un circuit électronique, notamment un microcircuit en silicium.

Dans le domaine de l'électronique, ii est parfois difficile, voire impossible, de fournir à un circuit électronique une tension continue d'alimentation stable et parfaitement régulée. En particulier, on rencontre cette difficulté avec les microcircuits montés sur des supports portables, par exemple les microcircuits des cartes à puce ou des étiquettes électroniques, qui ne possèdent pas leur propre source d'alimentation et sont alimentés depuis l'extérieur dans des conditions qui ne sont pas toujours optimales.

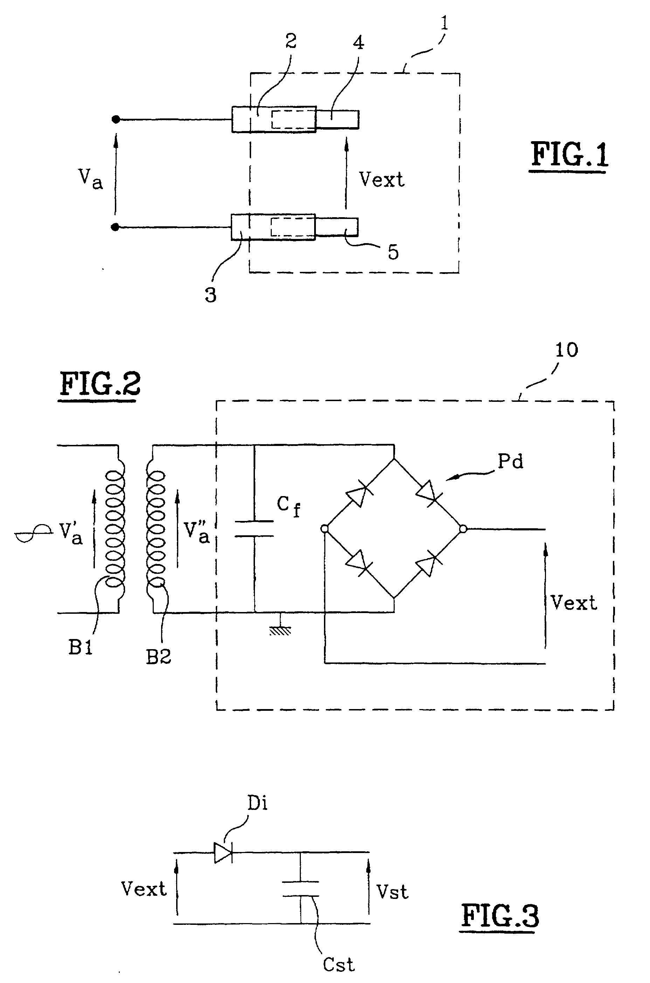

A titre d'exemple, la figure 1 représente schématiquement un microcircuit 1 de carte à puce recevant une tension d'alimentation Va au moyen de plages métallisées 4, 5 de la carte coopérant avec des languettes métalliques 2, 3 d'un terminal dans lequel la carte est insérée. Avec l'usure et l'encrassement des languettes 2, 3 ou des plages 4, 5, on voit apparaître des résistances de contact parasites qui engendrent un bruit de fond électronique élevé et provoquent une baisse de tension proportionnelle à l'intensité du courant. Ainsi, le microcircuit 1 voit sur son entrée d'alimentation une tension $V_{ext}$ instable et bruitée, différente de la tension Va délivrée par le terminal.

Sur la figure 2, on a représenté un microcircuit 10 d'une carte à puce sans contact alimenté par induction magnétique. Un terminal envoie à la carte un champ magnétique au moyen d'une bobine émettrice B1 excitée par une tension alternative Va'. La carte est équipée d'une bobine réceptrice B2 dans laquelle apparaît une tension induite Va". La tension induite Va" est filtrée par une capacité Cf puis redressée par un pont de diodes Pd. A la sortie du pont de diodes Pd, on trouve la tension d'alimentation $V_{ext}$ du microcircuit 10. Le problème que pose ce mode de transmission de l'énergie est que, dans des conditions réelles d'utilisation, l'énergie transmise à la bobine B2 peut varier brusquement. Par exemple, la distance entre les bobines B1 et B2 peut n'être pas constante et dépendre des mouvements de l'utilisateur qui tient la carte à puce dans une main. Egalement, l'utilisateur peut, sans le savoir, masquer la bobine B2 avec sa main, etc. De plus, un mode de transmission de données numériques au microcircuit 10 consiste à moduler ou hacher la tension d'excitation Va' selon un codage approprié, de sorte que la tension $V_{ext}$ peut fluctuer de façon significative selon la distribution des "1" et des "0" au cours du transfert des données. En définitive, la puissance transmise est rarement constante et la tension reçue $V_{ext}$ peut varier fortement ou être entachée d'un bruit de fond élevé.

Dans la pratique, de telles fluctuations ou micro-coupures de la tension d'alimentation peuvent conduire à des aberrations de fonctionnement, comme l'interruption d'une transaction en cours, l'écriture de données erronées dans une zone de la mémoire du microcircuit, ou encore l'écriture dans une zone interdite de la mémoire.

Pour pallier cet inconvénient, on a généralement recours à une capacité de stabilisation $C_{st}$ intégrée, de forte valeur, formant un réservoir de charges électriques apte à compenser les défaillances de la tension d'alimentation. Comme montré schématiquement en figure 3, la capacité $C_{st}$ reçoit la tension d'alimentation $V_{ext}$ par l'intermédiaire d'une diode d'isolement Di. On prélève aux bornes de $C_{st}$ une tension stabilisée $V_{st}$ qui constitue la tension d'alimentation interne du microcircuit.

L'inconvénient de cette solution est que la capacité de stabilisation $C_{st}$ occupe une surface de silicium considérable En effet, la capacité $C_{st}$ étant égale à :

$$Cst = \varepsilon \ S/d$$

S étant la surface des plaques de la capacité $C_{st}$, d la distance entre les plaques et $\varepsilon$ la constante diélectrique du matériau présent entre les plaques, d et $\varepsilon$ étant imposés par la technologie, on voit que la prévision d'une capacité $C_{st}$ de forte valeur implique l'occupation d'une surface de silicium importante.

Par exemple, une capacité de stabilisation $C_{st}$ de l'ordre de la centaine de picofarads, qui permet de maintenir une tension de 5V et un courant de 50 µA pendant 10 µs en cas de coupure de la tension d'alimentation externe $V_{ext}$, occupe une surface de silicium de 0,1 mm$^2$, soit l'équivalent de 500 transistors avec leurs connexions.

Un objectif de la présente invention est de prévoir un moyen de stabilisation d'une tension d'alimentation qui soit de moindre encombrement.

Pour atteindre cet objectif, la présente invention se fonde sur la constatation simple selon laquelle, étant donné la relation

$$Q = CV,$$

on peut stocker une charge électrique Q plus importante dans une capacité C polarisée à une tension V plus élevée. Par là, il vient que l'on peut stocker la même charge électrique Q dans une capacité de plus faible valeur et de moindre encombrement en polarisant cette capacité à une tension plus élevée.

Ainsi, selon la présente invention, pour améliorer le rapport entre encombrement et charge stockée d'une capacité de stabilisation d'une tension d'alimentation présente sur une ligne d'alimentation, on polarise la capacité de stabilisation sous une tension plus élevée que la tension d'alimentation, et on prévoit un moyen interrupteur pour connecter la capacité de stabilisation à la ligne d'alimentation quand la tension d'alimentation est inférieure à un seuil prédéterminé.

La présente invention concerne ainsi un dispositif pour stabiliser une tension d'alimentation présente sur une ligne d'alimentation, comprenant au moins une capacité de stabilisation polarisée par une tension plus élevée que la tension d'alimentation, et au moins un moyen interrupteur pour connecter la capacité de stabilisation à la ligne d'alimentation quand la tension d'alimentation est inférieure à un seuil prédéterminé.

Selon un mode de réalisation, la tension de polarisation de la capacité de stabilisation est délivrée par une pompe de charges.

Selon un mode de réalisation, le moyen interrupteur est commandé par un circuit de déclenchement à seuil recevant en entrée la tension d'alimentation.

Selon un mode de réalisation, la capacité de stabilisation est un élément d'une ligne de production d'une haute tension de programmation d'une zone mémoire de type EEPROM, la ligne de production de la tension de programmation étant maintenue active en permanence.

Selon un mode de réalisation, il est prévu des moyens pour empêcher la fermeture du moyen interrupteur pendant les périodes de programmation de la zone mémoire. Dans ce cas, on donne la priorité à la programmation de la zone mémoire en cas d'insuffisance de la tension d'alimentation externe.

Ces objets, caractéristiques et avantages ainsi que d'autres de la présente invention apparaîtront plus clairement à la lecture de la description suivante d'exemples de réalisation de la présente invention, faite en relation avec les figures jointes parmi lesquelles :

- les figures 1 et 2 déjà décrites représentent schématiquement des systèmes classiques d'alimentation d'un microcircuit de carte à puce,
- la figure 3 déjà décrite représente une capacité de stabilisation classique de la tension d'alimentation d'un microcircuit,
- la figure 4 représente sous forme de blocs un dispositif de stabilisation selon la présente invention d'une tension d'alimentation d'un microcircuit,
- la figure 5 est un schéma électrique représentant un mode de réalisation d'un bloc de la figure 4,
- la figure 6 est un schéma électrique représentant un mode de réalisation d'un autre bloc de la figure 4,
- la figure 7 représente un mode de réalisation de la présente invention applicable à un microcircuit comprenant une zone mémoire de type EEPROM.

La figure 1 représente l'architecture générale d'un dispositif 14 selon la présente invention, permettant de stabiliser la tension d'alimentation d'un microcircuit. Sur la figure 1, on n'a pas représenté le microcircuit mais uniquement la ligne d'alimentation interne 15 de ce microcircuit, qui reçoit une tension d'alimentation externe $V_{ext}$, supposée instable, par l'intermédiaire d'une diode d'isolement Di. Dans la pratique, la diode d'isolement Di peut n'être pas nécessaire, notamment quand la tension $V_{ext}$ est délivrée par un pont de diodes comme dans l'exemple de la figure 2. La tension d'alimentation présente sur la ligne 15, notée $V_{st}$, est par exemple de l'ordre de 4 à 5 volts.

Le dispositif 14 selon l'invention comprend essentiellement une capacité de stabilisation $C_{hv}$, un circuit survolteur 16 alimenté par la tension $V_{st}$, et un interrupteur 17 reliant l'anode de la capacité $C_{hv}$ à la ligne d'alimentation 15. La capacité $C_{hv}$ est polarisée par une tension $V_{hv}$ délivrée par le circuit survolteur 16, $V_{hv}$ étant supérieure à la tension d'alimentation $V_{st}$ et par exemple de l'ordre de 20 V. L'interrupteur 17 est commandé par un circuit 18 qui surveille la tension d'alimentation $V_{st}$ sur la ligne 15 et la compare à une référence de tension $V_{min}$, qui représente par exemple le seuil inférieur en dessous duquel le microcircuit risque de présenter des dysfonctionnements. Classiquement, la tension $V_{min}$ est de l'ordre de 3 à 4 V.

Quand le microcircuit est correctement alimenté, la tension d'alimentation $V_{st}$ est supérieure au seuil $V_{min}$ et le circuit 18 maintient l'interrupteur 17 ouvert. Si, à un instant donné, la tension d'alimentation $V_{st}$ diminue et passe sous le seuil $V_{min}$, le circuit 18 ferme l'interrupteur 17 et la capacité $C_{hv}$ se décharge dans la ligne 15. La tension d'alimentation $V_{st}$ remonte au dessus du seuil $V_{min}$, le circuit 18 ouvre à nouveau l'interrupteur, puis le referme à nouveau si la tension $V_{st}$ redevient inférieure à $V_{min}$, ainsi de suite. Ainsi, par des opérations successives d'ouverture et de fermeture de l'interrupteur 17, la tension d'alimentation $V_{st}$ est maintenue au dessus de $V_{min}$ et le circuit peut fonctionner correctement.

Bien entendu, il apparaîtra clairement à l'homme de l'art que d'autres modes de fonctionnement du dispositif de l'invention peuvent être prévus. Par exemple, le circuit de commande 18 peut présenter une hystérésis de commutation, c'est-à-dire des seuils de fermeture $V_{min}$ et d'ouverture $V_{max}$ de l'interrupteur 17 différents. Dans ce cas, la tension d'alimentation $V_{st}$ est maintenue dans une fourchette de tension comprise entre $V_{min}$ et $V_{max}$. Egalement, l'interrupteur 17 peut être remplacé par un moyen interrupteur plus élaboré, par exemple un circuit interrupteur assurant le contrôle du courant débité par la capacité Chv.

L'avantage de l'invention apparaît clairement : si Q représente la charge électrique à stocker pour compenser les fluctuations de la tension d'alimentation $V_{st}$, la capacité $C_{hv}$ doit être égale à

$$C_{hv} = Q/V_{hv}$$

Dans l'art antérieur, on aurait dû prévoir une capacité $C_{st}$ de plus forte valeur et par conséquent plus volumineuse, égale à

$$C_{st} = Q/V_{st}$$

Ainsi, le gain en encombrement obtenu grâce à la présente invention est égal au rapport $V_{hv}/V_{st}$, ce qui signifie que l'on a diminué par quatre la surface de silicium nécessaire pour réaliser la capacité de stabilisation $C_{hv}$ quand la tension de polarisation $V_{hv}$ est égale à 20V et la tension $V_{st}$ égale à 5V. On n'a pas compté dans ce bilan l'encombrement des circuits 16 et 18 de l'invention car, comme on le verra ci-après, ces circuits peuvent être réalisés de façon très simple et être d'un encombrement négligeable.

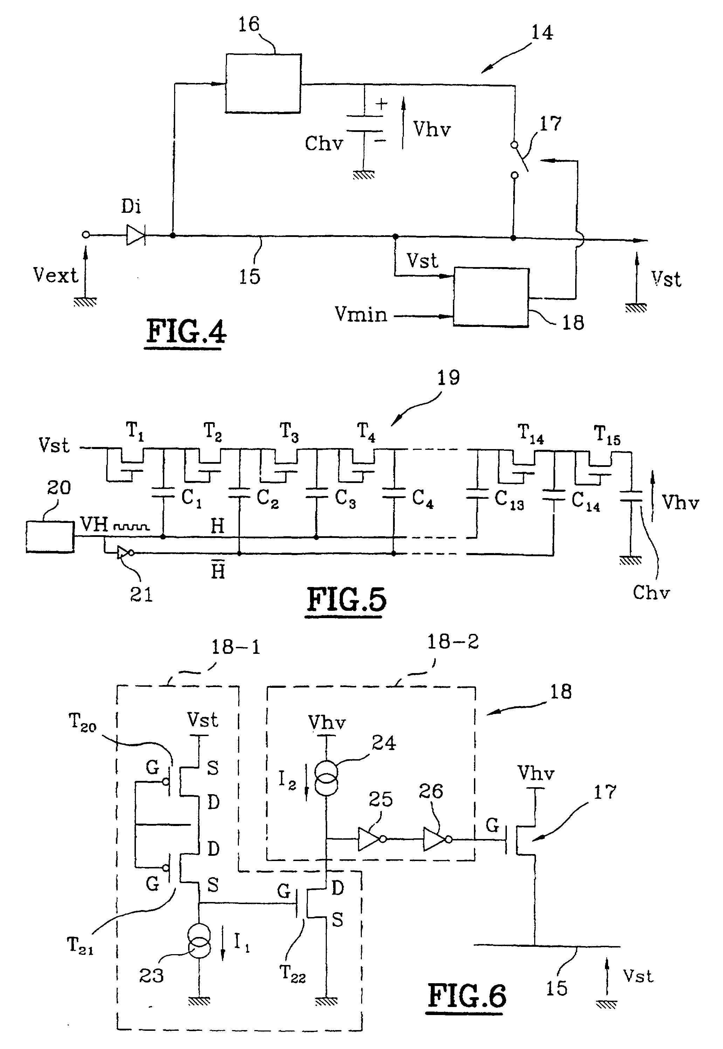

Un mode de réalisation du circuit survolteur 16 avantageux en raison de sa simplicité est illustré en figure 5. Le circuit survolteur est une pompe de charge 19, du type utilisé dans les mémoires EEPROM (effaçables et programmables électriquement) pour générer la tension de programmation des points mémoire. La pompe de charge 19 comprend une pluralité de capacités de faible valeur et de faible encombrement disposées en cascade, ici 14 capacités C1 à C14. La tension $V_{st}$ est appliquée sur l'anode de la première capacité C1 par l'intermédiaire d'un premier transistor MOS T1, l'anode de C1 est reliée à l'anode de C2 par un deuxième transistor MOS T2, l'anode de C2 à l'anode de C3 par un troisième transistor MOS T3, ainsi de suite jusqu'à l'anode de C14 qui est reliée à l'anode de la capacité de stabilisation $C_{hv}$ par un dernier transistor MOS T15. Les transistors T1 à T15 fonctionnent en mode saturé (grille connectée au drain) et sont équivalents à des diodes. Les cathodes des capacités de rang impair C1, C3,...C13 sont attaquées par un signal carré alternatif VH délivré par un oscillateur 20, et les cathodes des capacités de rang pair C2, C4,...C14 par un signal /VH en opposition de phase avec VH, délivré par un inverseur 21 recevant VH sur son entrée.

Quand VH est à 1 et /VH à 0, les transistors/diodes de rang pair T2, T4...T14 sont passants et chaque capacité de rang impair C1 à C13 se décharge dans la capacité adjacente de rang pair C2 à C14. Quand VH est à 0 et /VH à 1, les transistors/diodes de rang impair T1, T3,....T15 sont passants, les capacités de rang pair C2, C4,...C12 se déchargent dans les capacités de rang impair C3, C5, C13. En bout de chaîne, la capacité C14 se décharge dans $C_{hv}$. En entrée de la chaîne, la capacité C1 est chargée par la tension $V_{st}$. Une fois le dispositif stabilisé, la tension $V_{hv}$ appliquée par la pompe de charge à la capacité $C_{hv}$ est égale à

$$V_{hv} = 13\ VH - (VT1 + VT2 + VT3 + ....VT15)$$

VT1, VT2,....VT15 étant les tensions de seuils des transistors MOS T1 à T15, dont la valeur décend de la tension entre la source S des transistors et le substrat du microcircuit.

L'homme de l'art notera que l'avantage d'utiliser une telle pompe de charge 19 comme circuit survolteur 16 est que les capacités C1 à C14 de la pompe 19 forment un réservoir de charges supplémentaires, qui en combinaison avec la capacité $C_{hv}$, confère au dispositif 14 selon l'invention une aptitude encore plus importante à l'amortissement des fluctuations de la tension d'alimentation $V_{st}$.

La figure 6 représente un mode de réalisation particulièrement simple du circuit 18 de commande de l'interrupteur 17, ici un transistor MOS 17. Le circuit 18 comprend un transistor PMOS T20 et deux transistors NMOS T21, T22. Les transistors T20 et T21 sont disposés en série et fonctionnent en mode saturé, leurs grilles G étant ramenées sur leurs drains D. La source S de T20 est reliée à la ligne d'alimentation 15 et reçoit la tension $V_{st}$. La source S de T21 attaque la grille G de T22 dont la source S est connectée à la masse. Un générateur de courant 23 délivrant un courant I1 de faible intensité est disposé entre la source S de T21 et la masse pour éviter l'apparition d'un potentiel flottant quand le transistor T22 est ouvert. Enfin, le drain D de T22 est alimenté par la tension $V_{hv}$ par l'intermédiaire d'un deuxième générateur de courant 24 et attaque la grille G de l'interrupteur 17 par l'intermédiaire d'un étage adaptateur de puissance, comprenant ici deux inverseurs 25, 26 en série. Le générateur de courant 24 délivre un courant I2 de faible intensité et garantit une faible consommation du circuit 18.

Comme représenté en traits pointillés sur la figure 6, les transistors T20, T21 et T22 forment un étage 18-1 de déclenchement de la fermeture de l'interrupteur 17, alimenté par la tension $V_{st}$. Le transistor T22 forme avec les deux inverseurs 25, 26 et le générateur de courant 24 un étage de commande 18-2 de la grille G du transistor 17, alimenté par la tension $V_{hv}$. Le circuit 18 déclenche la fermeture du transistor 17 quand la tension $V_{st}$ est inférieure à la somme des trois tensions de seuils VT20, VT21, VT22 des transistors T20, T21, T22, soit environ 3V, qui représentent ici la tension de seuil $V_{min}$. Ainsi, quand la tension d'alimentation $V_{st}$ est inférieure à $V_{min}$, le transistor T22 s'ouvre, la grille G de l'interrupteur 17 se trouve au potentiel de $V_{hv}$ et l'interrupteur 17 se ferme.

L'avantage de ce mode de réalisation est que le circuit 18 possède sa propre tension de seuil interne $V_{min}$. Il est donc d'une grande simplicité de réalisation. Toutefois, de nombreux autres modes de réalisation pourront être prévus par l'homme de l'art. Par exemple, la tension de seuil $V_{min}$ peut être fournie par une source de tension de référence et le circuit 18 peut être un comparateur recevant en entrée $V_{min}$ et $V_{st}$. Egalement, selon un mode de réalisation le plus simple qui puisse être mis en oeuvre, la grille du transistor 17 est directement attaquée par la tension de seuil $V_{min}$. Dans ce cas, le transistor 17 fonctionne en interrupteur-régulateur et maintient la tension $V_{st}$ au voisinage de la valeur de seuil $V_{min}$. Un résultat équivalent peut être obtenu au moyen d'un transistor bipolaire.

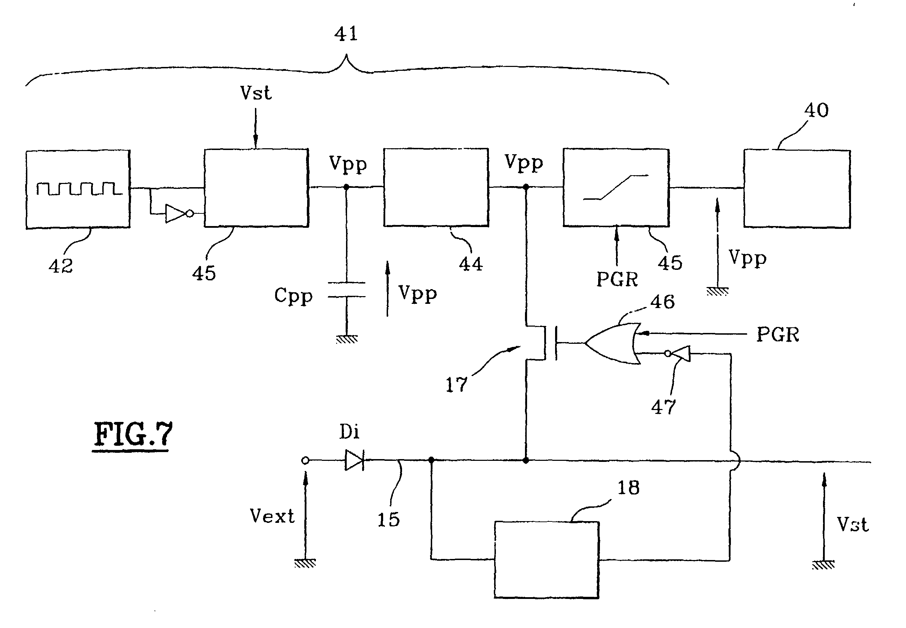

La figure 7 représente un mode de réalisation de la présente invention applicable à un microcircuit possédant une zone mémoire 40 programmable et effaçable électriquement, de type EEPROM. Un tel microcircuit est de façon classique équipé d'une ligne 41, que l'on appellera ligne "haute tension", fournissant une haute tension de programmation $V_{pp}$ nécessaire aux opérations d'écriture ou d'effacement dans la zone mémoire 40. Classiquement, la haute tension de programmation $V_{pp}$ est de l'crdre de 20V. La ligne haute tension 41 comprend en série un oscillateur 42, une pompe de charges 43 du type déjà décrit délivrant la haute tension $V_{pp}$, une capacité de stockage $C_{pp}$ pour stabiliser la haute tension $V_{pp}$, un étage régulateur 44 et un étage de mise en forme 45 commandé par un signal de programmation PGR. Le rôle de l'étage 45 est d'appliquer progressivement, sous la forme d'une rampe, la tension de programmation $V_{pp}$ à la zone mémoire 40.

Ici, l'idée de l'invention est d'utiliser la ligne haute tension 41 et sa capacité $C_{pp}$, inutilisée en dehors des périodes de programmation de la mémoire 40, comme un réservoir de charges électriques permettant de stabiliser la tension d'alimentation interne $V_{st}$. La capacité $C_{pp}$ remplace la capacité $C_{hv}$ de la figure 4 et la tension $V_{pp}$ joue le rôle de la tension $V_{hv}$. L'interrupteur 17 déjà décrit est disposé entre la ligne haute tension 41 et la ligne d'alimentation 15. L'interrupteur 17 est connecté avant l'étage de mise en forme 45, par exemple à la sortie de l'étage régulateur 44. Le circuit de commande 18 est conservé. Par ailleurs, la ligne haute tension 41 fonctionne ici en permanence, alors que, dans l'art antérieur, on arrête l'oscillateur 42 lorsque des opérations d'écriture ou d'effacement dans la mémoire 40 sont terminées. L'homme de l'art notera que l'oscillateur 42 peut toutefois fonctionner à fréquence réduite en dehors des périodes de programmation de la mémoire 40.

Selon un mode de réalisation, la présente invention prévoit d'inhiber pendant les périodes de programmation le signal de commande de l'interrupteur 17 délivré par le circuit 18. En effet, si une coupure de l'alimentation externe $V_{ext}$ intervient pendant la programmation de la zone mémoire 40, on préfère donner la priorité à la programmation, c'est-à-dire utiliser toutes les charges électriques disponibles dans la capacité $C_{pp}$ pour que la programmation se termine dans de bonnes conditions. Dans ce cas, et comme représenté en figure 7, l'interrupteur 17 peut être commandé au moyen d'une porte NON OU 46 recevant en entrée le signal PGR et recevant, par l'intermédiaire d'une porte inverseuse 47, la sortie du circuit de commande 18. Ainsi, l'interrupteur 17 ne peut être fermé tant que le signal PGR à 1 indique qu'une programmation est en cours.

En définitive, avec peu de moyens ajoutés (le circuit 18, les portes 46, 47 et l'interrupteur 17) et une surface de silicium qui peut être considérée comme négligeable, on obtient une régulation efficace de la tension d'alimentation interne $V_{st}$.

Il apparaîtra clairement à l'homme de l'art que la présente invention est susceptible de nombreuses variantes de réalisation, perfectionnements et applications. La présente invention peut être utilisée pour réduire la surface de silicium nécessaire à la réalisation de la fonction de stabilisation de la tension interne $V_{st}$ d'alimentation d'un microcircuit, ou pour réaliser un dispositif de stabilisation très performant pour les applications problématiques où la tension d'alimentation reçue est fortement instable et la consommation du circuit élevée. Dans ce dernier cas, on pourrait combiner le mode de réalisation de la figure 4 et celui de la figure 7, c'est à dire utiliser deux capacités $C_{hv}$ et $C_{pp}$. De façon générale, la présente invention permet d'améliorer le rapport entre performance et surface occupée des systèmes de stabilisation intégrés et est susceptible de s'appliquer à tout type de microcircuit.

**Revendications**

1. Dispositif (14) pour stabiliser une tension d'alimentation ($V_{st}$) présente sur une ligne d'alimentation (15) d'un microcircuit de silicium, comprenant au moins une capacité de stabilisation ($C_{hv}$, $C_{pp}$) intégrée dans le microcircuit, **caractérisé en ce qu'**il comprend en outre :

   - des moyens (16) pour polariser la capacité de stabilisation ($C_{hv}$, $C_{pp}$) sous une tension ($V_{hv}$, $V_{pp}$) plus élevée que ladite tension d'alimentation ($V_{st}$), de manière à améliorer le rapport entre la charge (Q) stockée par la capacité ($C_{hv}$, $C_{pp}$) et son encombrement dans le microcircuit,
   - au moins un moyen interrupteur (17) et des moyens (18, 46, 47) de commande du moyen interrupteur (17), agencés pour connecter la capacité de stabilisation ($C_{hv}$, $C_{pp}$) à la ligne d'alimentation (15) quand la tension d'alimentation ($V_{st}$) est inférieure à un seuil prédéterminé ($V_{min}$).

2. Dispositif selon la revendication 1, **caractérisé en ce que** la tension ($V_{hv}$, $V_{pp}$) de polarisation de la capacité de stabilisation ($C_{hv}$, $C_{pp}$) est délivrée par une pompe de charges (16, 43).

3. Dispositif selon l'une des revendications 1 et 2, **caractérisé en ce que** ledit moyen interrupteur (17) est commandé par un circuit de déclenchement (18) à seuil Vmin) recevant en entrée la tension d'alimentation ($V_{st}$).

4. Dispositif selon la revendication 3, **caractérisé en ce que** le seuil (Vmin) du circuit de déclenchement (18) est un seuil interne déterminé par la somme des tensions de seuil (VT20, VT21, VT22) d'une pluralité de transistors MOS (T20, T21, T22).

**5.** Dispositif selon l'une des revendications 3 et 4, **caractérisé en ce que** le moyen interrupteur (17) est un transistor MOS, ledit circuit de déclenchement (18) comprend un étage (18-2) de commande de la grille de l'interrupteur (17) alimenté par la tension de polarisation ($V_{hv}$, $V_{pp}$) de la capacité de stabilisation ($C_{hv}$, $C_{pp}$).

**6.** Dispositif selon l'une des revendications précédentes, **caractérisé en ce que** ladite capacité de stabilisation ($C_{hv}$) est un élément d'une ligne (41) de production d'une haute tension ($V_{pp}$) de programmation d'une zone mémoire (40) de type EEPROM, ladite ligne (41) de production de la tension de programmation ($V_{pp}$) étant maintenue active en permanence.

**7.** Dispositif selon la revendication 6, **caractérisé en ce qu'**il comprend des moyens (46, 47) pour empêcher la fermeture du moyen interrupteur (17) pendant les périodes de programmation (PGR) de la zone mémoire (40).

**8.** Procédé pour améliorer le rapport entre encombrement et charge stockée d'une capacité ($C_{hv}$, $C_{pp}$) de stabilisation d'une tension d'alimentation ($V_{st}$) présente sur une ligne d'alimentation (15) d'un microcircuit de silicium, la capacité étant intégrée dans ledit microcircuit, **caractérisé en ce qu'**il comprend les étapes consistant à :

- polariser la capacité de stabilisation ($C_{hv}$, $C_{pp}$) sous une tension ($V_{hv}$, $V_{pp}$) plus élevée que ladite tension d'alimentation ($V_{st}$), et
- prévoir un moyen interrupteur (17) et des moyens (18, 46, 47) de commande du moyen interrupteur (17), pour connecter la capacité de stabilisation ($C_{hv}$, $C_{pp}$) à la ligne d'alimentation (15) quand la tension d'alimentation ($V_{st}$) est inférieure à un seuil prédéterminé ($V_{min}$).

**Patentansprüche**

**1.** Vorrichtung (14) zur Stabilisierung einer Versorgungsspannung ($V_{st}$), die auf einer Versorgungsleitung (15) einer Siliziummikroschaltung vorhanden ist, umfassend mindestens eine Stabilisierungskapazität ($C_{hv}$, $C_{pp}$), die in der Mikroschaltung integriert ist, **dadurch gekennzeichnet, dass** sie außerdem umfasst:

- Mittel (16) zur Polarisierung der Stabilisierungskapazität ($C_{hv}$, $C_{pp}$) unter einer höheren Spannung ($V_{hv}$, $V_{pp}$) als der Versorgungsspannung ($V_{st}$), um das Verhältnis zwischen der durch die Kapazität ($C_{hv}$, $C_{pp}$) gespeicherten Ladung (Q) und ihrem Platzbedarf in der Mikroschaltung zu verbessern,

- mindestens ein Schaltmittel (17) und Mittel (18, 46, 47) zur Steuerung des Schaltmittels (17), welche angeordnet sind um die Stabilisierungskapazität ($C_{hv}$, $C_{pp}$) mit der Versorgungsleitung (15) zu verbinden, wenn die Versorgungsspannung ($V_{st}$) geringer als eine vorbestimmte Schwelle ($V_{min}$) ist.

**2.** Vorrichtung nach Anspruch 1, **dadurch gekennzeichnet, dass** die Spannung ($V_{hv}$, $V_{pp}$) zur Polarisierung der Stabilisierungskapazität ($C_{hv}$, $C_{pp}$) durch eine Ladungspumpe (16, 43) geliefert wird.

**3.** Vorrichtung nach einem der Ansprüche 1 oder 2, **dadurch gekennzeichnet, dass** das Schaltmittel (17) gesteuert wird durch eine Schwellenauslöseschaltung (18), welche am Eingang die Versorgungsspannung ($V_{st}$) empfängt.

**4.** Vorrichtung nach Anspruch 3, **dadurch gekennzeichnet, dass** die Schwelle ($V_{min}$) der Auslöseschaltung (18) eine interne Schwelle ist, welche bestimmt wird durch die Summe der Schwellwertspannungen (VT20, VT21, VT22) einer Vielzahl von MOS-Transistoren (T20, T21, T22).

**5.** Vorrichtung nach einem der Ansprüche 3 oder 4, **dadurch gekennzeichnet, dass** das Schaltmittel (17) ein MOS-Transistor ist, wobei die Auslöseschaltung (18) eine Steuerstufe (18-2) des Gates des Schalters (17) umfasst, welche durch die Polarisierungsspannung ($V_{hv}$, $V_{pp}$) der Stabilisierungskapazität ($C_{hv}$, $C_{pp}$) versorgt wird.

**6.** Vorrichtung nach einem der vorangegangenen Ansprüche, **dadurch gekennzeichnet, dass** die Stabilisierungskapazität ($C_{hv}$) ein Element einer Linie (41) zur Erzeugung einer Programmierhochspannung ($V_{pp}$) eines EEPROM-Speicherbereichs (40) ist, wobei die Linie (41) zur Erzeugung der Programmierspannung ($V_{pp}$) permanent aktiv gehalten wird.

**7.** Vorrichtung nach Anspruch 6, **dadurch gekennzeichnet, dass** sie Mittel (46, 47) umfasst, um das Schließen des Schaltmittels (17) während der Programmierperioden (PGR) des Speicherbereichs (40) zu verhindern.

**8.** Verfahren zur Verbesserung des Verhältnisses zwischen dem Platzbedarf und der gespeicherten Ladung einer Stabilisierungskapazität ($C_{hv}$, $C_{pp}$) einer Versorgungsspannung ($V_{st}$), die auf einer Versorgungsleitung (15) einer Siliziummikroschaltung vorhanden ist, wobei die Kapazität in der Mikroschaltung integriert ist, **dadurch gekennzeichnet, dass** es Schritte umfasst, welche darin bestehen:

- die Stabilisierungskapazität ($C_{hv}$, $C_{pp}$) unter einer höheren Spannung ($V_{hv}$, $V_{pp}$) als der Versorgungsspannung ($V_{st}$) zu polarisieren, und

- ein Schaltmittel (17) und Mittel (18, 46, 47) zur Steuerung des Schaltmittels (17) vorzusehen, um die Stabilisierungskapazität ($C_{hv}$, $C_{pp}$) mit der Versorgungsleitung (15) zu verbinden, wenn die Versorgungsspannung ($V_{st}$) geringer als eine vorbestimmte Schwelle ($V_{min}$) ist.

**Claims**

1. Device (14) for stabilising a supply voltage (Vst) present on a supply cable (15) of a silicon microcircuit, comprising at least one stabilising capacitor (Chv, Cpp) integrated in the microcircuit, **characterised in that** it further comprises :

- means (16) for polarising the stabilising capacitor (Chv, Cpp) under a voltage (Vhv) which is greater than the said supply voltage (Vst), so as to improve the connection between the charge (Q) stored by the capacitor (Chv, Cpp) and its resistance in the microcircuit,

- at least one switch (17) and means (18, 46, 47) for controlling the switch (17), which have been provided for connecting the stabilising capacitor (Chv, Cpp) to the supply cable (15) when the supply voltage (Vst) is below a predetermined threshold (Vmin).

2. Device according to claim 1, **characterised in that** the polarisation voltage (Vhv, Vpp) of the stabilising capacitor (Chv, Cpp) is released by a charge pump (16, 43).

3. Device according to either of claims 1 and 2, **characterised in that** the said switch (17) is controlled by a triggering circuit (18) with a threshold (Vmin) which receives the supply voltage (Vst) at an inlet.

4. Device according to claim 3, **characterised in that** the threshold (Vmin) of the triggering circuit (18) is an internal threshold, determined by the sum of the threshold voltages (VT20, VT21, VT22) of a plurality of MOS transistors (T20, T21, T22).

5. Device according to either of claims 3 and 4, **characterised in that** the switch (17) is an MOS transistor, the said triggering circuit (18) includes a stage (18-2) which controls the base of the switch (17) supplied by the polarisation voltage (Vhv, Vpp), of the stabilising capacitor (Chv, Cpp).

6. Device according to any of the preceding claims, **characterised in that** the said stabilising capacitor (Chv) is an element of a cable (41) producing a high voltage (Vpp) for programming a storage-zone (4) of the EEPROM type, said cable (41) producing the programming voltage (Vpp) being kept permanently active.

7. Device according to claim 6, **characterised in that** it comprises means (46, 47) for preventing the closure of the switch (17) during programming periods (PGR) of the storage-zone (40).

8. Method of improving the connection between stored resistance and charge of a stabilising capacitor (Chv, Cpp) of a supply voltage (Vst) present on a supply cable (15) of a silicon microcircuit, the capacitor being integrated in the said microcircuit, **characterised in that** it comprises steps, consisting of :

- polarising the stabilising capacitor (Chv, Cpp) under a voltage (Vhv, Vpp) which is higher than the said supply voltage (Vst) and

- providing a switch (17) and means (18, 46, 47) for controlling the switch (17), so as to connect the stabilising capacitor (Chv, Cpp) to the supply cable (15) when the supply voltage (Vst) is lower than a predetermined threshold (Vmin).

FIG.1

FIG.2

FIG.3

EP 0 978 082 B1

**FIG.4**

**FIG.5**

**FIG.6**

**FIG.7**